# EUROPEAN PATENT SPECIFICATION

(11) **EP 2 090 686 B1**
(45) Date of publication and mention of the grant of the patent: **25.05.2011**
(21) Application number: 08171882.7
(22) Date of filing: 17.12.2008
(51) Int. Cl.: D06F 33/02

(54) **Drum-type washing machine**
Trommelwaschmaschine
Machine à laver à tambour

(30) Priority: 18.02.2008 JP 2008035604
(43) Date of publication of application: 19.08.2009
(73) Proprietor: Panasonic Corporation, Kadoma-shi Osaka 571-8501 (JP)
(72) Inventor: Inoue, Hiroyuki, 1-61, Shiromi 2-chome, Chuo-ku, Osaka-shi Osaka 540-6207 (JP); Terai, Kenji, 1-61, Shiromi 2-chome, Chuo-ku, Osaka-shi Osaka 540-6207 (JP); Fuji, Hiroyuki, 1-61, Shiromi 2-chome, Chuo-ku, Osaka-shi Osaka 540-6207 (JP); Sarada, Kiyoshi, 1-61, Shiromi 2-chome, Chuo-ku, Osaka-shi Osaka 540-6207 (JP); Nomura, Hiroyoshi, 1-61, Shiromi 2-chome, Chuo-ku, Osaka-shi Osaka 540-6207 (JP)
(74) Representative: Schwabe - Sandmair - Marx

(56) References cited:
- JP-A- 2006 043 105

## Description

### TECHNICAL FIELD

The present invention relates to a drum-type washing machine for washing laundries placed in a drum by rotating a cylindrical drum having a bottom.

### BACKGROUND ART

A conventional drum-type washing machine as described in JP 2006 - 346270 A has a controller for controlling the washing machine to perform optimal washing. This controller estimates the movement of laundries based on the changes in the output of an acceleration sensor attached to the washing tub and the changes in the torque current component of the motor, and responds by changing the speed of the motor that rotates the drum.

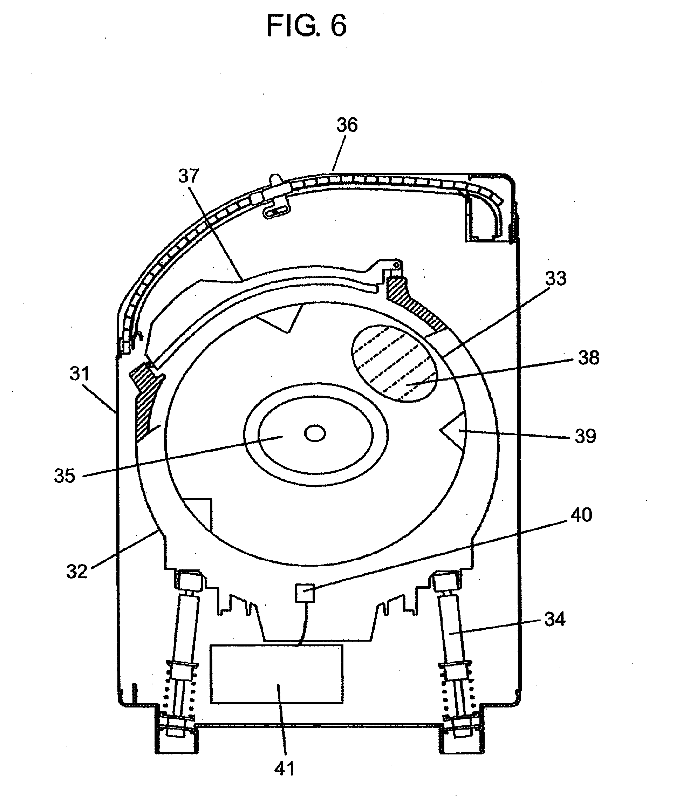

Fig. 6 illustrates the structure of a conventional drum-type washing machine. Washing tub 32 is supported in casing 31 by suspension mechanism 34 so as to be able to rock. Drum 33 is rotatably disposed inside washing tub 32. Motor 35 drives and rotates drum 33.

Door 36 is provided on the upper front of casing 31. A user opens door 36 to expose front opening 37 of washing tub 32 and the front opening (not illustrated) of drum 33 so as to load laundry 38 to or remove laundry 38 from drum 33.

Multiple agitating protrusions 39 are formed on the inner peripheral wall of drum 33. Agitating protrusions 39 lift laundry 38 upward, and then let it fall under its own weight as drum 33 rotates. In other words, laundry 38 is washed or rinsed by the agitating movement of beat-washing.

Semiconductor acceleration sensor 40 is attached to washing tub 32 and measures the oscillation of washing tub 32. Controller 41 detects the movement of washing tub 32 based on the changes in the output of semiconductor acceleration sensor 40 and the changes in torque current component of motor 35. Controller 41 then estimates movement of laundry 38, and controls washing operation by motor 35.

With this structure, however, laundry 38 may float on the water surface under some conditions such as a high proportion of synthetic-fiber items being present in laundry 38, high water level setting, and too many detergent bubbles. Under such conditions, agitating protrusions 39 cannot catch laundry 38, and thus laundry 38 is not effectively beat-washed.

In addition, if such a state occurs, whether laundry 38 is floating on the water or the quantity of laundry 38 is small cannot be identified by a simple change in acceleration output. This similarly applies to the current indicating the torque component of motor 35. There is no correlation between floating laundry 38 and torque.

JP-2006 043105 A describes a washing machine by which washing and rinsing can be carried out reliably without regard to the amount and quality of laundry articles. The washing machine can carry out a laundry state detection process in which the variation width of the current value of a motor detected by a current detection means is calculated every period which is not shorter than the rotation period of the rotary drum when a rotary drum is rotated, so that the state of the laundry articles in the rotary drum is detected. In the detection process, when the variation width of the current value of a motor is not more than the first prescribed value, the state is judged that the laundry articles are floating and idling in the drum. Thus, a state where mechanical force is not applied to the laundry articles rightly since they float on the washing water in the drum is judged precisely, so that optimal washing laundry is carried out and soil of the laundry articles is removed surely.

### SUMMARY OF THE INVENTION

It is an object of the present invention to provide a drum-type washing machine which identifies whether the laundry is floating on the water surface, in order to optimal washing.

The aforementioned object is solved by the subject-matter of independent claim 1. The dependent claims are directed to advantageous embodiments.

### ADVANTAGES OF THE INVENTION

A drum-type washing machine identifies whether or not a laundry is floating on the water surface, in order to achieve optimal washing. The drum-type washing machine includes a casing, a washing tub, a drum, a motor, a vibration detector, a frequency component calculator, and a controller. The washing tub is supported in the casing by a resilient supporting mechanism. The drum is placed inside the washing tub for placing laundry, and has an agitating protrusion on its inner peripheral wall. The motor rotates the drum. The vibration detector detects vibration acceleration of the washing tub. The frequency component calculator calculates a frequency component of vibration acceleration detected by the vibration detector. The controller controls the forward-reverse continuous pivot drive mode. In the forward-reverse continuous pivot drive mode, the drum repeats the forward and reverse rotations alternately at a rotating speed that the laundry lifted up by drum rotation falls from the height at which its own weight exceeds the centrifugal force. The controller further determines the state of laundry inside the drum during washing or rinsing, based on a result given from the frequency component calculator. The movement of laundry can be determined by extracting a vibration component in a specific frequency from vibration of the washing tub. Accordingly, the state of laundry inside the drum can be accurately determined without being affected by the quantity of laundry, fabric type, detergent amount, or water quantity. The washing performance and rinsing effect can thus be improved.

### BRIEF DESCRIPTION OF DRAWINGS

Fig. 1 illustrates a structure of a drum-type washing machine in accordance with a first exemplary embodiment of the present invention.
Fig. 2A is illustrates an operation principle of a floating state in a forward-reverse continuous pivot drive mode of the drum-type washing machine shown in Fig. 1.
Fig. 2B is a graph illustrating a frequency characteristic of vibration detected in the floating state.
Fig. 3A illustrates an operation principle of a beat-washing state in the forward-reverse continuous pivot drive mode of the drum-type washing machine shown in Fig. 1.
Fig. 3B is a graph illustrating a frequency characteristic of vibration detected in the beat-washing state in Fig. 3A.
Fig. 4A illustrates an operation principle of the floating state in the forward-reverse sudden pivot drive mode of the drum-type washing machine shown in Fig. 1.
Fig. 4B illustrates an operation principle of the beat-washing state from 90° in the forward-reverse sudden pivot drive mode of the drum-type washing machine shown in Fig. 1.
Fig. 4C illustrates an operation principle of the beat-washing state from 150° in the forward-reverse sudden pivot drive mode of the drum-type washing machine shown in Fig. 1.
Fig. 5 illustrates the relation between the drum movement of the drum-type washing machine shown in Fig. 1 and a laundry dropping position.
Fig. 6 illustrates a structure of a conventional drum-type washing machine.

### DETAILED DESCRIPTION OF THE INVENTION

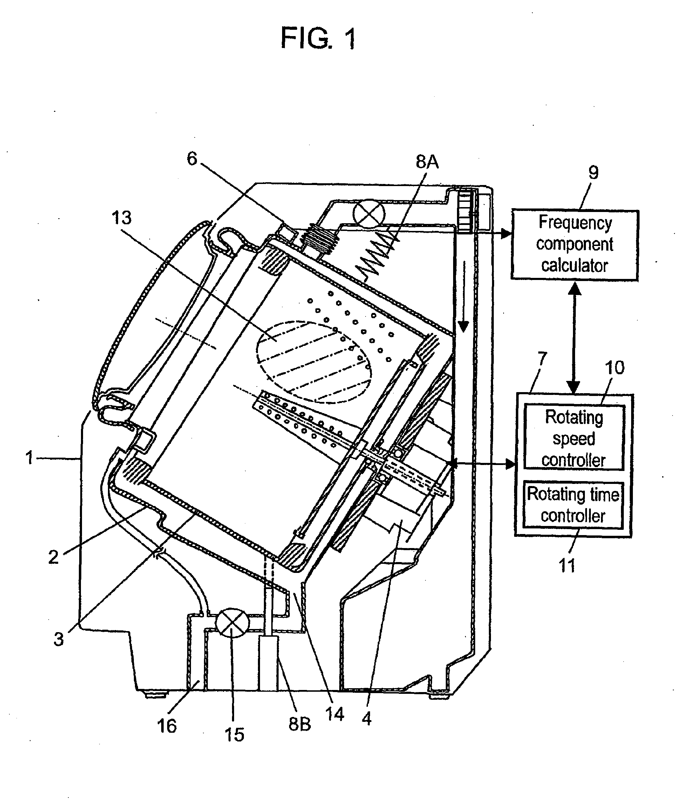

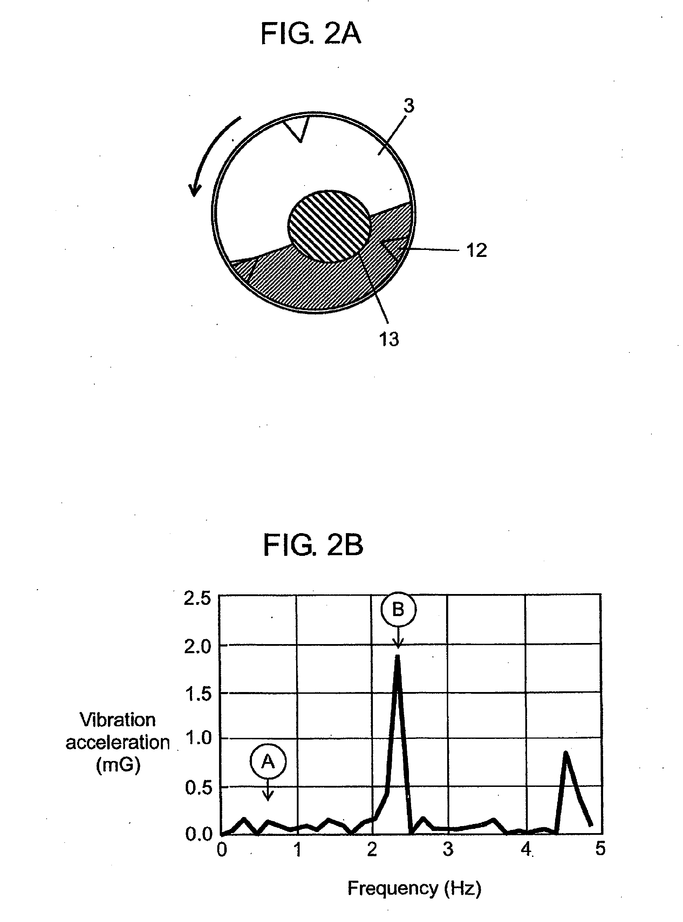

Fig. 1 illustrates the structure of a drum-type washing machine in an exemplary embodiment of the present invention. Figs. 2A to 3B illustrate the operation principle in the washing machine while in a forward-reverse continuous pivot drive mode. The washing machine includes casing 1, washing tub 2, drum 3, motor 4, vibration detector 6, frequency component calculator 9, and controller 7.

Casing 1 contains washing tub 2, and washing tub 2 rotatably houses drum 3. Drum 3, which is a washing basket, is capable of containing laundry 13, such as clothes. Drum 3 is connected to motor 4, which rotates drum 3. Agitating protrusions 12 are provided on an inner peripheral wall of drum 3. Agitating protrusion 12 lifts up laundry 13 as drum 3 rotates by driving motor 4, thereafter laundry 13 falls back by its own weight. In this way, this washing machine washes laundry 13 in the beat-washing manner.

Motor 4 is typically configured with a brushless motor, and its rotating speed is variable. During washing, motor 4 repeats forward and reverse rotation, alternatively. Washing tub 2 is supported so as to be able to rock by casing 1 that has a vibration-proof structure (resilient support mechanism) such as spring 8A and damper 8B.

Washing tub 2 is provided with drain outlet 14 on the bottom thereof. Washing or rinsing water inside washing tub 2 is drained outside through drainpipe 16 by opening drain unit (drain valve) 15.

Vibration detector 6 is typically configured with at least one semiconductor acceleration sensor, and detects a vibration acceleration component of washing tub 2 in at least one of front and back, left and right, and top and bottom directions. In other words, vibration detector 6 detects the vibration acceleration of washing tub 2 in at least one of the vertical direction, first horizontal direction, and second horizontal direction that is different from the first horizontal direction. It is preferable that vibration detector 6 is configured with an acceleration sensor sensitive to multiple-axis directions (two or three axes) to the front and back, left and right, and top and bottom, rather than a single direction. Since vibration of washing tub 2 cannot be limited only to one direction, the use of a three-axis acceleration sensor and the use of a value obtained by adding the acceleration components in three axes are more effective for accurately detecting the movement of washing tub 2.

Frequency component calculator 9 applies Fourier transformation to vibration acceleration detected by vibration detector 6 so as to extract a frequency component. In other words, frequency component calculator 9 calculates the frequency component with respect to vibration acceleration detected by vibration detector 6. Frequency component calculator 9 is configured with a microcomputer, and applies discrete Fourier transformation (DFT) or fast Fourier transformation (FFT) to a signal detected by vibration detector 6 so as to calculate an amplitude at each frequency component.

Controller 7 controls a series of operations, including washing, rinsing, dehydration, and drying; and also controls the rotation of motor 4. Controller 7 also controls the forward-reverse continuous pivot drive mode. In this mode, the drum 3 repeats forward and reverse rotations alternately at a rotating speed at which laundry 13 is lifted upward by the rotation of drum 3 and falls from the height at which its own weight exceeds the centrifugal force. Controller 7 also determines the state of laundry 13 inside drum 3, during washing or rinsing, based on the result output from frequency component calculator 9.

Controller 7 includes rotating speed controller 10 and rotating time controller 11. Rotating speed controller 10 detects and controls the rotating speed of drum 3. Rotating time controller 11 measures and controls the rotating time of drum 3.

In Fig. 1, frequency component calculator 9 and controller 7 are illustrated outside casing 1. However, they are provided inside or along casing 1.

Controller 7 determines the floating state of laundry 13 inside drum 3 depending on a proportion of the frequency component of the vibration acceleration calculated by frequency component calculator 9.

Next, the structure of detection and control in line with the operation principle in the forward-reverse continuous pivot drive mode is described with reference to Figs. 2A through 3B. In the forward-reverse continuous pivot drive mode, laundry 13 inside drum 3 is lifted upward to an angle position at which its own weight exceeds the centrifugal force imposed by the angular speed of drum 3 and agitating protrusion 12. From this angle position, laundry 13 is beaten against the inner bottom of drum 3 when it falls under its own weight. In this driving system, drum 3 rotates in a same direction for relatively long time.

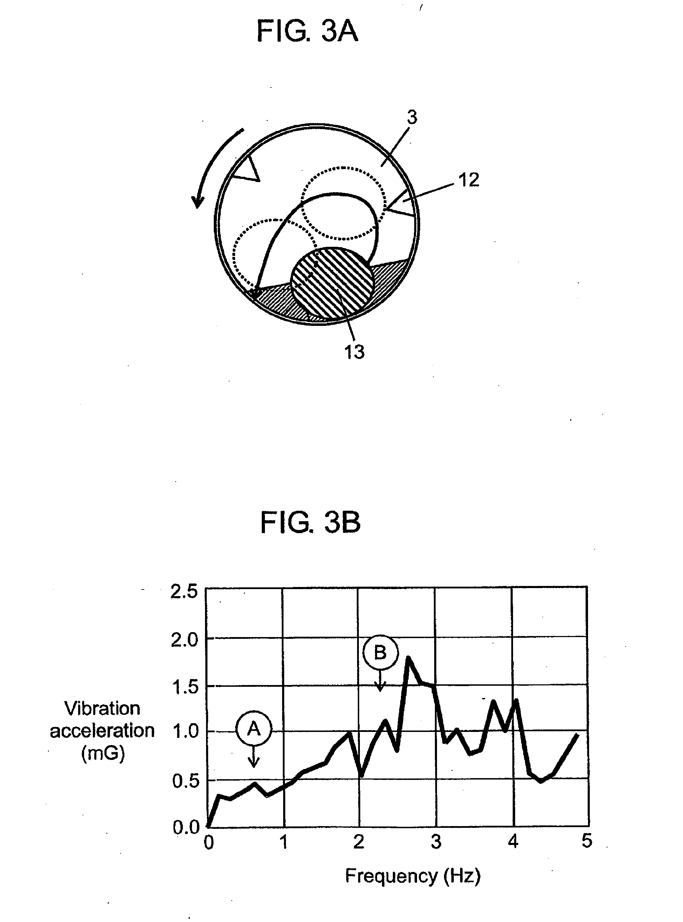

Fig. 2A and 3A show examples of the state of laundry 13 in drum 3.
Agitating protrusion 12 provided on drum 3 lifts and agitates laundry 13 moistened with washing water.

Fig. 2A shows the state where laundry 13 is floating on the water due to factors such as many synthetic-fabric items in laundry 13, high water level, and too many detergent bubbles. In this state, agitating protrusion 12 cannot lift up laundry 13, and thus laundry 13 is not fully agitated. In other words, agitating protrusion 12 just hits the water, in spite of the rotating of drum 3. This state is hereinafter called a floating state.

In Fig. 3A, agitating protrusion 12 lifts up laundry 13, which is then released from the inner wall of drum 3 in the middle under its own weight, falls to the bottom of drum 3 due to gravity, and is beaten against drum 3. This state is hereinafter called a beat-washing state. The state in Fig. 3A is most suitable for washing, but the state in Fig. 2A significantly degrades the washing effect.

Figs. 2B and 3B illustrate the results of frequency analysis relative to the vibration acceleration of washing tub 2 by driving drum 3, which is detected by vibration detector 6, in the states shown in Figs. 2A and 3A, respectively. The horizontal axis in Figs. 2B and 3B indicates frequency, and the vertical axis indicates the amplitude of the frequency component (vibration acceleration) in the Fourier amplitude spectrum.

In each of Figs. 2B and 3B, point A indicates a position equivalent to N/60 when the number of revolutions at a frequency corresponding to the rotating speed of drum 3 is N [rpm]. If the number of agitating protrusions 12 is M, point B indicates a position equivalent to M × N/60. N/60 is corresponds to the drum rotation frequency. Figs. 2B and 3B indicate the cases where N = 45 and M = 3. In other words, the drum rotation frequency is 0.75 Hz, and the frequency at point B is 2.25 Hz.

The vibration acceleration at point A reflects the vibration due to rotation of laundry 13. On the other hand, the vibration acceleration at point B reflects the acceleration component generated by agitating protrusion 12 beating the water supplied inside drum 3.

It is apparent from these drawings that the vibration acceleration around point B is significantly larger than that at other frequencies in Fig. 2B, illustrating the floating state, compared to the beat-washing state shown in Fig. 3B.

In the floating state as in Fig. 2A, laundry 13 is floating on water and not lifted by agitating protrusion 12. Accordingly, there is no impact vibration caused by free fall of laundry 13. Therefore, the change in acceleration generated in drum 3 and washing tub 2 is extremely small. As a result, agitating protrusion 12 hits water supplied inside drum 3. This makes the vibration acceleration around point B large, and vibration acceleration at frequencies other than around point B small.

In this exemplary embodiment, the above characteristic is used to identify the frequency component in vibration acceleration of washing tub 2 by applying Fourier transformation to a signal from vibration detector 6 attached to washing tub 2, using frequency component calculator 9. Then, controller 7 determines whether laundry 13 inside drum 3 is in the floating state or not based on the amplitude of frequency component calculated by frequency component calculator 9.

In this way, controller 7 calculates the difference between the vibration acceleration around point B and vibration acceleration in a predetermined frequency range. When the calculation result exceeds a predetermined value, controller 7 determines that laundry 13 in drum 3 is in the floating state. Based on this determination, controller 7 can identify whether the acceleration component is generated by agitating protrusion 12 beating water supplied to drum 3 or agitating laundry 13. Accordingly, controller 7 can accurately determine whether laundry 13 in drum 3 is floating or not.

Here, the predetermined frequency range may be point A, which is a frequency corresponding to the rotating speed of drum 3. The predetermined value can be, for example, set between 0.7 mG and 1.5 mG when the capacity of drum 3 is 70 liters and the water in washing tub 2 has a volume of 15 liters.

If the floating state is identified, controller 7 increases the rotating speed of motor 4 in the forward-reverse continuous pivot drive mode using rotating speed controller 10. This encourages the agitation of laundry 13 together with washing water in drum 3. As a result, beat-washing, shown in Fig. 3A, is effectively applied to laundry 13. This method of control thus improves washing performance.

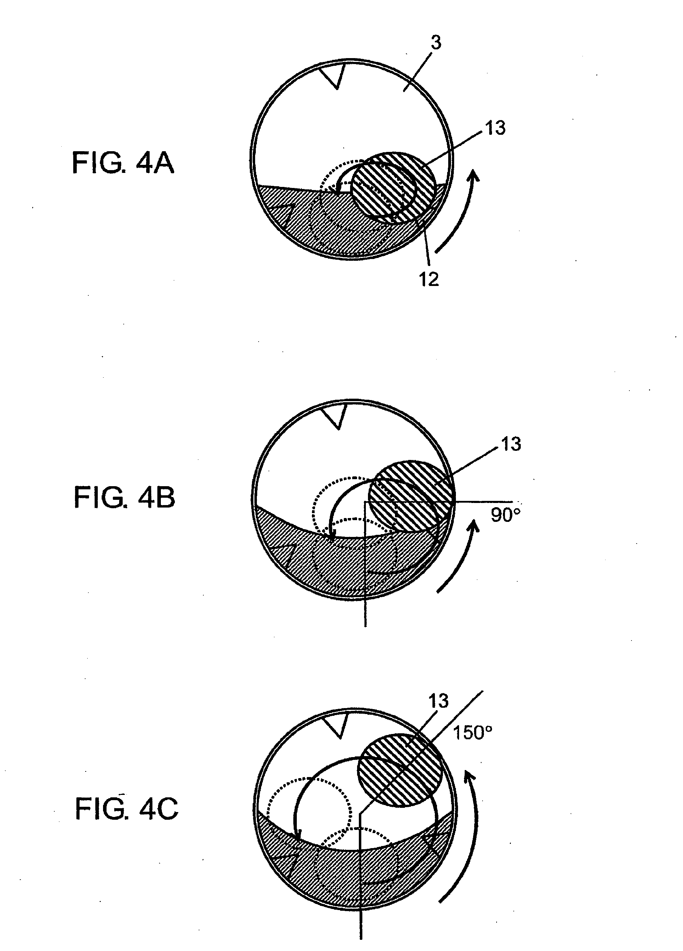

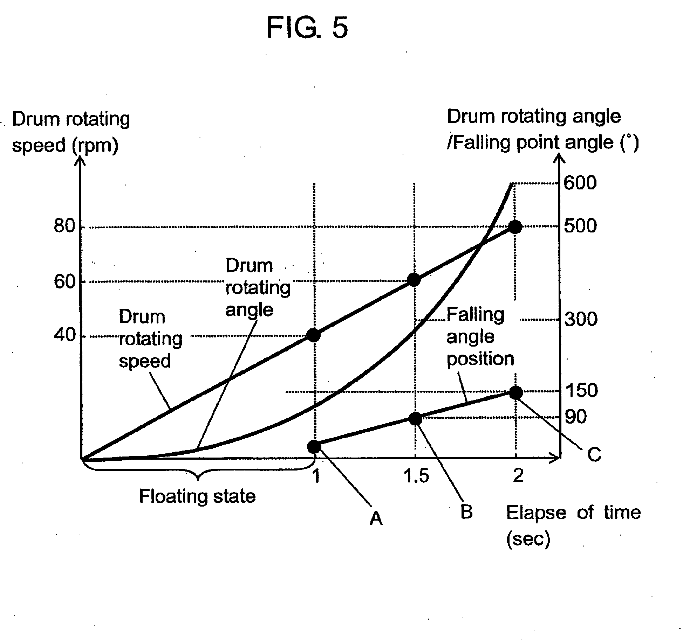

Figs. 4A to 4C illustrate the operation principle of the forward-reverse sudden pivot drive mode used to improve washing performance. Fig. 5 shows the relationship between the movement of drum 3 and the drop position of laundry 13.

In the forward-reverse sudden pivot drive mode, laundry 13 is pressed to the inner wall of drum 3 by the centrifugal force generated during the suddenly-accelerated rotation of drum 3, and laundry 13 is carried to the upper part of drum 3. Then, due to the sudden braking of drum 3, laundry 13 falls off the inner wall of drum 3 by inertia. By this inertia and its own weight, laundry 13 falls to the lower part of drum 3, making a roughly parabolic curve, to the side opposite where laundry 13 has been lifted.

Figs. 4A, 4B, and 4C show examples of the movement of laundry 13 when drum 3 is driven by motor 4 in one direction for 1 sec, 1.5 sec, and 2 sec, respectively, and rotation of drum 3 reaches 40 rpm, 60 rpm, and 80 rpm, respectively. The states shown in Figs. 4A to 4C are established under the precondition that laundry 13 tends to float on water, as shown in Fig. 2A.

Fig. 4A illustrates the case when rotation of drum 3 is slow, at 40 rpm. As in Fig. 2A, laundry 13 is floating on the water. On the other hand, Figs. 4B and 4C illustrate states where the rotation of drum 3 is increased to 60 rpm and 90 rpm. Accordingly, such a high rotating speed and sudden braking lift laundry 13 by agitating protrusion 12, and release laundry 13 to fall from the inner wall of drum 3. Laundry 3 is beaten against the lower part of drum 3 under its own weight. In other words, laundry 13 moves the same way as in the beat-washing state shown in Fig. 3A.

Fig. 4B illustrates the state of beat-washing from 90° and Fig. 4C illustrates the state of beat-washing from 150°. The parabolic curve of laundry 13 while falling is longer in beat-washing from 150° than that in beat-washing from 90°, and the falling distance is also greater. Accordingly, the beat-washing effect is also greater.

More specifically, even if the drum 3 is driven in the forward-reverse sudden pivot drive mode, the floating phenomenon occurs if the rotating speed is low. However, the floating state can be switched to the beat-washing state by switching the driving control to forward-reverse sudden pivot drive control with larger acceleration in the start of rotation and braking or by extending the time of each rotation (pivot) in the forward-reverse sudden pivot drive. In the latter case, controller 7 extends the rotating time of motor 4 of each rotation (pivot) in the forward-reverse sudden pivot drive mode, using rotating time controller 11.

Fig. 5 is a graph illustrating the state in Figs. 4A, 4B, and 4C, respectively. The horizontal axis indicates the rotating time (elapse of time), and the vertical axis indicates the rotation speed and the rotation angle of drum 3, and the angle of the position where laundry 13 falls with reference to the bottom face of drum 3. These values vary according to the type of laundry 13 in drum 3, water volume, and the diameter of drum 3.

When the speed of rotation of drum 3 reaches 40 rpm after driving motor 4 for 1 second, laundry 13 floats at point A. In other words, the lifting angle is close to 0°, and the agitating force is small. This state is equivalent to the floating state shown in Fig. 4A.

When motor 4 is driven for 1.5 seconds and drum 3 reaches 60 rpm, laundry 13 is lifted to point B at 90° with reference to the bottom face of drum 3. Laundry 13 then falls from this position. This is beat-washing state from 90°, as shown in Fig. 4B. In this case, drum 3 is rotated (pivoted) through about 300°.

When motor 4 is driven for 2 seconds, and drum 3 reaches 80 rpm, laundry 13 is lifted to point C at about 150° with reference to the bottom face of drum 3. Laundry 13 then falls from that position. This is beat-washing from 150°, as shown in Fig. 4C. In this case, drum 3 is rotated (pivoted) through about 600° (one turn and 240° rotation).

In the above description, the beat-washing state is imposed by pivoting drum 3 through about 300° to 600°. However, the angles are not limited to this range. The angle range changes appropriately depending on conditions such as the size of drum 3. In the forward-reverse sudden pivot drive mode, drum 3 repeats suddenly-accelerated rotation to a rotating angle exceeding 90° but within two turns and a sudden braking. The forward-reverse sudden pivot drive mode is disclosed in International Publication No. 2008/0999547.

As described above, vibration detector 6 detects the vibration acceleration caused by falling laundry 13. As a result, if the floating state of laundry 13 is detected, controller 7 increases the rotating speed of motor 4 using rotating speed controller 10. Alternatively, rotating time controller 11 extends the continuous driving time of motor 4 by a predetermined value. These methods of control improve washing performance by changing the floating state to the beat-washing state.

Alternatively, if controller 7 determines that laundry 13 is floating, controller 7 controls the rotation of drum 3 so as to switch to the forward-reverse sudden pivot drive mode to improve washing performance by reestablishing the beat-washing state.

If laundry 13 is determined to be floating in the forward-reverse continuous pivot drive mode, laundry 13 may remain floating even after the mode is switched to the forward-reverse sudden pivot drive mode if the rotating speed is low. To solve this, controller 7 increases the rotating speed of motor 4 using rotating speed controller 10 even in the forward-reverse sudden pivot drive mode. Alternatively, controller 7 extends the continuous driving time of motor 4 by a predetermined value, using rotating time controller 11.

If controller 7 switches the mode to the forward-reverse sudden pivot drive mode when laundry 13 is determined to be floating, the load applied to motor 4 increases. Accordingly, it is preferable to make duration of the forward-reverse sudden pivot drive mode short as much as possible. Accordingly, controller 7 returns to the forward-reverse continuous pivot drive mode from the forward-reverse sudden pivot drive mode as soon as the state changes from the floating state to beat-washing state. Alternatively, controller 7 extends duration of the forward-reverse sudden pivot drive mode depending on a degree of the floating state, or executes the forward-reverse sudden pivot drive mode and the forward-reverse continuous pivot drive mode alternately. These ways of control prevents floating of laundry 13, and also improves washing performance by lifting up laundry 13 from the bottom face of drum 3 to over 90° and dropping laundry 13 to beat it against drum 3. In particular, if the duration of the forward-reverse sudden pivot drive mode is extended, a percentage of the forward-reverse sudden pivot drive mode that demonstrates high washing performance increases in the state that laundry 13 tends to float. This further improves the washing performance.

The floating state is caused by factors such as many synthetic-fabric items being present in laundry 13, high water level, and too many detergent bubbles. In these factors, the high water level can be solved after starting the operation. Therefore, it is preferable that controller 7 discharges a predetermined quantity of washing water in washing tub 2 by opening drain unit (drain valve) 15 for a predetermined time if laundry 13 is determined to be floating. Or, a predetermined quantity of washing water in washing tub 2 can be discharged regardless of the opening time of drain unit 15. If the factor of too much water is eliminated by this control, the floating state can be further effectively solved in addition to the control based on a degree of aforementioned proportion of frequency components.

As described above, in the drum rotating speed control method and program in this exemplary embodiment, the floating state of laundry 13 is determined based on the frequency component of vibration acceleration of washing tub 2. The determination becomes more accurate by evaluating at least two vibration acceleration components in top and bottom, left and right, and front and back directions. In addition, the floating state can be determined without the influence of washing water by determining vibration acceleration by multiplying rotating speed of drum 3 by the number of agitating protrusions 12.

If laundry 13 is determined to be floating, the rotating speed of motor 4 is increased to shift to the beat-washing state. Or, the normal drum forward-reverse continuous pivot drive mode is switched to the forward-reverse sudden pivot drive mode. Or, the washing water inside washing tub 2 is discharged to eliminate one factor of the floating state. These ways of control effectively switches to the beat-washing state. Accordingly, the drum-type washing machine can achieve preferable washing and rinsing.

As described above, by the rotating speed control method and program for the drum-type washing machine of the present invention, the floating state of laundry can be detected based on the frequency component of the vibration acceleration of the washing tub. Furthermore, the drum-type washing machine of the present invention prevents the floating of the laundry based on the detected results, thus improving washing and rinsing performance by controlling the drum rotating speed and rotating time. The present invention is thus broadly applicable to washing and drying machines and business-use washing machines, in addition to home-use washing machines.

## Claims

1. A drum-type washing machine comprising:
a casing (1);
a washing tub (2) supported by a resilient suspension mechanism of the casing in the casing (1);
a drum (3) having an agitating protrusion (12) on an inner peripheral wall thereof, the drum (3) being placed in the washing tub (2) for placing a laundry; and
a motor (4) configured to rotate the drum;
a controller (7) configured to control the motor (4) at least; the controller (7) being configured to control a forward-reverse continuous pivot drive mode in which the drum (3) repeats forward and reverse rotations alternately at a rotating speed at which the laundry lifted up by rotation of the drum (3) falls from a height at which own weight of the laundry exceeds a centrifugal force thereto;**characterized in that**:
the drum-type washing machine further comprising:
a vibration detector (6) configured to detect vibration acceleration of the washing tub (2); and
a frequency component calculator (9) configured to calculate a frequency component of the vibration acceleration detected by the vibration detector (6);
wherein the controller (7) determines a state of the laundry inside the drum (3) during one of washing and rinsing, based on a result received from the frequency component calculator (9).

2. The drum-type washing machine according to claim 1,
wherein the vibration detector (6) includes at least one acceleration sensor configured to detect a vibration acceleration component of the washing tub (2) in at least two of a vertical direction, a first horizontal direction, and a second horizontal direction that is different from the first horizontal direction; and
the controller (7) determines the state of the laundry based on vibration accelerations in at least two of the directions obtained from the vibration detector (6) or a sum of vibration accelerations in the at least two of the directions.

3. The drum-type washing machine according to claim 1 or 2, wherein the agitating protrusion (12) is one of agitating protrusions, the controller (7) calculates a difference between vibration acceleration in a frequency band received from the frequency component calculator (9) and vibration acceleration in a predetermined frequency band, the vibration acceleration in the frequency band being a value obtained by multiplying a rotating speed of the drum (3) by a number of the agitating protrusions (12); and the controller (7) determines that the laundry is floating in the drum (3) if a calculation result exceeds a predetermined value.

4. The drum-type washing machine according to any one of claims 1 to 3, wherein the controller (7) includes a rotating speed controller configured to change a rotating speed of the motor (4), and
the controller (7) increases the rotating speed of the motor (4) using the rotating speed controller if the laundry in the drum (3) is determined to be floating.

5. The drum-type washing machine according to any one of claims 1 to 4, wherein the controller (7) can control a forward-reverse sudden pivot drive mode in which the drum (3) repeats accelerated rotation to a rotating angle exceeding 90° but within two turns and a braking; and
the controller (7) controls the motor (4) such that the forward-reverse continuous pivot drive mode is switched to one of the forward-reverse sudden pivot drive mode, or the forward-reverse sudden pivot drive mode and the forward-reverse continuous pivot drive mode are alternatively performed, if the laundry in the drum (3) is determined to be floating in the forward-reverse continuous pivot drive mode.

6. The drum-type washing machine according to claim 5, wherein the controller (7) increases a percentage of executing the forward-reverse sudden pivot drive mode against the forward-reverse continuous pivot drive mode, if the laundry in the drum (3) is determined to be floating.

7. The drum-type washing machine according to any one of claims 1 to 4, wherein the controller (7) can control the forward-reverse sudden pivot drive mode in which the drum (3) repeats accelerated rotation to a rotating angle exceeding 90° but within two turns and a braking; and
the controller (7) increases a percentage of the forward-reverse sudden pivot drive mode against the forward-reverse continuous pivot drive mode, if the laundry in the drum (3) is determined to be floating.

8. The drum-type washing machine according to any one of claims 1 to 7, further comprising a drain unit (15) configured to discharge washing water in the washing tub (2);
wherein the controller (7) discharges the washing water in the washing tub (2) for one of a predetermined quantity and a predetermined time, if the laundry in the drum (3) is determined to be floating.

## Patentansprüche

1. Trommelwaschmaschine, umfassend:
ein Gehäuse (1),
einen Waschzuber (2), der mittels eines elastischen Aufhängungsmechanismus des Gehäuses in dem Gehäuse (1) gehalten ist,
eine Trommel (3), die an ihrer inneren Umfangswand eine Rührabragung aufweist, wobei die Trommel (3) in dem Waschzuber (2) zum Anordnen einer Wäsche angeordnet ist, und
einen Motor (4), der konfiguriert ist, die Trommel zu drehen,
ein Steuergerät (7), das konfiguriert ist, wenigstens den Motor (4) zu steuern, wobei das Steuergerät (7) konfiguriert ist, einen kontinuierlichen Vorwärts-Rückwärts-Schwenkantriebsmodus zu steuern, in welchem die Trommel (3) abwechselnd Vorwärts- und Rückwärtsdrehungen bei einer Drehgeschwindigkeit wiederholt, bei welcher die mittels Drehung der Trommel (3) aufgehobene Wäsche von einer Höhe, bei welcher das Eigengewicht der Wäsche eine auf sie ausgeübte Zentrifugalkraft übersteigt, fällt,
**dadurch gekennzeichnet, dass**
die Trommelwaschmaschine ferner umfasst:
einen Vibrationsdetektor (6), der konfiguriert ist, eine Vibrationsbeschleunigung des Waschzubers (2) zu detektieren, und
einen Frequenzkomponentenrechner (9), der konfiguriert ist, eine Frequenzkomponente der mittels des Vibrationsdetektors (6) detektierten Vibrationsbeschleunigung zu berechnen,
wobei das Steuergerät (7) einen Zustand der Wäsche in der Trommel (3) während einem aus Waschen und Spülen basierend auf einem Ergebnis, das von dem Frequenzkomponentenrechner (9) empfangen wird, ermittelt.

2. Trommelwaschmaschine nach Anspruch 1,
wobei der Vibrationsdetektor (6) wenigstens einen Beschleunigungssensor beinhaltet, der konfiguriert ist, eine Vibrationsbeschleunigungskomponente des Waschzubers (2) in wenigstens zwei aus einer vertikalen Richtung, einer ersten horizontalen Richtung und einer zweiten horizontalen Richtung, welche sich von der ersten horizontalen Richtung unterscheidet, zu detektieren, und
wobei das Steuergerät (7) den Zustand der Wäsche basierend auf Vibrationsbeschleunigungen in wenigstens zwei der Richtungen, die von dem Vibrationsdetektor (6) erhalten werden, oder eine Summe von Vibrationsbeschleunigungen in die wenigstens zwei der Richtungen ermittelt.

3. Trommelwaschmaschine nach Anspruch 1 oder 2, wobei die Rührabragung (12) eine von Rührabragungen ist, wobei das Steuergerät (7) eine Differenz aus einer Vibrationsbeschleunigung in einem von dem Frequenzkomponentenrechner (9) empfangenen Frequenzband und einer Vibrationsbeschleunigung in einem vorherbestimmten Frequenzband berechnet, wobei die Vibrationsbeschleunigung in dem Frequenzband ein Wert ist, der durch Multiplizieren einer Drehgeschwindigkeit der Trommel (3) mit einer Anzahl der Rührabragungen (12) erhalten wird, wobei das Steuergerät (7) ermittelt, dass die Wäsche in der Trommel (3) schwimmt, wenn das Berechnungsergebnis einen vorherbestimmten Wert überschreitet.

4. Trommelwaschmaschine nach einem der Ansprüche 1 bis 3, wobei das Steuergerät (7) ein Drehgeschwindigkeitssteuergerät beinhaltet, das konfiguriert ist, eine Drehgeschwindigkeit des Motors (4) zu ändern, und
wobei das Steuergerät (7) die Drehgeschwindigkeit des Motors (4) unter Verwendung des Drehgeschwindigkeitssteuergeräts erhöht, wenn die Wäsche in der Trommel (3) als schwimmend ermittelt wird.

5. Trommelwaschmaschine nach einem der Ansprüche 1 bis 4, wobei das Steuergerät (7) einen plötzlichen Vorwärts-Rückwärts-Schwenkantriebsmodus steuern kann, in welchem die Trommel (3) eine beschleunigte Drehung bis einen 90° übersteigenden Drehwinkel wiederholt, aber innerhalb zwei Wendungen und einer Bremsung, und
wobei das Steuergerät (7) den Motor (4) so steuert, dass der kontinuierliche Vorwärts-Rückwärts-Schwenkantriebsmodus in einen aus dem plötzlichen Vorwärts-Rückwärts-Schwenkantriebsmodus geschaltet wird oder der plötzliche Vorwärts-Rückwärts-Schwenkantriebsmodus und der kontinuierliche Vorwärts-Rückwärts-Schwenkantriebsmodus alternativ ausgeführt werden, wenn die Wäsche in der Trommel (3) in dem kontinuierlichen Vorwärts-Rückwärts-Schwenkantriebsmodus als schwimmend ermittelt wird.

6. Trommelwaschmaschine nach Anspruch 5, wobei das Steuergerät (7) einen Anteil der Ausführung des plötzlichen Vorwärts-Rückwärts-Schwenkantriebsmodus gegenüber dem kontinuierlichen Vorwärts-Rückwärts-Schwenkantriebsmodus erhöht, wenn die Wäsche in der Trommel (3) als schwimmend ermittelt wird.

7. Trommelwaschmaschine nach einem der Ansprüche 1 bis 4, wobei das Steuergerät (7) den plötzlichen Vorwärts-Rückwärts-Schwenkantriebsmodus steuern kann, in welchem die Trommel (3) eine beschleunigte Drehung bis einen 90° übersteigenden Drehwinkel wiederholt, aber innerhalb zwei Wendungen und einer Bremsung, und
wobei das Steuergerät (7) einen Anteil des plötzlichen Vorwärts-Rückwärts-Schwenkantriebsmodus gegenüber dem kontinuierlichen Vorwärts-Rückwärts-Schwenkantriebsmodus erhöht, wenn die Wäsche in der Trommel (3) als schwimmend ermittelt wird.

8. Trommelwaschmaschine nach einem der Ansprüche 1 bis 7, ferner umfassend eine Abflusseinheit (15), die konfiguriert ist, Waschwasser in dem Waschzuber (2) abzulassen,
wobei das Steuergerät (7) das Waschwasser in dem Waschzuber (2) für eine aus einer vorherbestimmten Menge und einer vorherbestimmten Zeit ablässt, wenn die Wäsche in der Trommel (2) als schwimmend ermittelt wird.

## Revendications

1. Machine à laver à tambour, comprenant :
une carrosserie (1) ;
une cuve de lavage (2) supportée dans la carrosserie (1) par un mécanisme de suspension élastique de la carrosserie ;
un tambour (3) ayant une saillie d'agitation (12) sur une paroi périphérique intérieure de celui-ci, le tambour (3) étant placé dans la cuve de lavage (2) pour y placer du linge à laver ; et
un moteur électrique (4) conçu pour faire tourner le tambour ;
une unité de commande (7) conçue pour commander au moins le moteur (4) ; l'unité de commande (7) étant conçue pour commander un mode d'entraînement continu de pivot en marche avant-arrière, le tambour (3) répétant en alternance les rotations en marche avant et arrière à une vitesse à laquelle le ligne soulevé par la rotation du tambour (3) retombe d'une hauteur à laquelle le propre poids du linge dépasse une force centrifuge s'exerçant sur celui-ci ; **caractérisé en ce que** :
la machine à laver à tambour comprend en outre :
un détecteur (6) de vibrations conçu pour détecter une accélération des vibrations du tambour de lavage (2) ; et
un calculateur (9) de composante de fréquence conçu pour calculer une composante de fréquence de l'accélération des vibrations détectée par le détecteur (6) de vibrations ;
l'unité de commande (7) déterminant un état du linge à l'intérieur du tambour (3) pendant le lavage ou le rinçage, d'après un résultat reçu du calculateur (9) de composante de fréquence.

2. Machine à laver à tambour selon la revendication 1,
dans laquelle le détecteur (6) de vibrations comprend au moins un détecteur d'accélération conçu pour détecter une composante d'accélération de vibrations de la cuve de lavage (2) dans au moins deux directions parmi une direction verticale, une première direction horizontale et une seconde direction horizontale différente de la première direction horizontale ; et
l'unité de commande (7) détermine l'état du linge à laver d'après des accélérations de vibrations dans au moins deux des directions obtenues à partir du détecteur (6) de vibrations ou d'une somme d'accélérations de vibrations dans les au moins deux des directions.

3. Machine à laver à tambour selon la revendication 1 ou 2, dans laquelle la saillie d'agitation (12) est l'une de plusieurs saillies d'agitation, l'unité de commande (7) calcule une différence entre l'accélération des vibrations dans une bande de fréquence reçue du calculateur (9) de composante de fréquence et l'accélération des vibrations dans une bande de fréquence prédéterminée, l'accélération des vibrations dans la bande de fréquence étant une valeur obtenue en multipliant une vitesse de rotation du tambour (3) par un nombre des saillies d'agitation (12) ; et l'unité de commande (7) détermine que le linge flotte dans le tambour (3) si un résultat de calcul dépasse une valeur prédéterminée.

4. Machine à laver à tambour selon l'une quelconque des revendications 1 à 3, dans laquelle l'unité de commande (7) comporte un système de commande de vitesse de rotation conçu pour changer une vitesse de rotation du moteur (4), et
l'unité de commande (7) accroît la vitesse de rotation du moteur (4) à l'aide du système de commande de vitesse de rotation s'il est déterminé que le linge à laver présent dans le tambour (3) flotte.

5. Machine à laver à tambour selon l'une quelconque des revendications 1 à 4, dans laquelle l'unité de commande (7) peut commander un mode d'entraînement brusque de pivot en marche avant-arrière, dans lequel le tambour (3) répète la rotation accélérée suivant un angle de rotation supérieur à 90° mais dans les limites de deux tours, et un freinage ; et
l'unité de commande (7) commande le moteur (4) de façon que le mode d'entraînement continu de pivot en marche avant-arrière passe dans le mode d'entraînement brusque de pivot en marche avant-arrière ou dans le mode d'entraînement continu de pivot en marche avant-arrière, ou le mode d'entraînement brusque de pivot en marche avant-arrière et le mode d'entraînement continu de pivot en marche avant-arrière sont exécutés en alternance, s'il est déterminé que le linge dans le tambour (3) flotte dans le mode d'entraînement continu de pivot en marche avant-arrière.

6. Machine à laver à tambour selon la revendication 5, dans laquelle l'unité de commande (7) accroît un pourcentage d'exécution du mode d'entraînement brusque de pivot en marche avant-arrière par rapport au mode d'entraînement continu de pivot en marche avant-arrière s'il est déterminé que le linge dans le tambour (3) flotte.

7. Machine à laver à tambour selon l'une quelconque des revendications 1 à 4, dans laquelle l'unité de commande (7) peut commander le mode d'entraînement brusque de pivot en marche avant-arrière, dans lequel le tambour (3) répète la rotation accélérée suivant un angle de rotation supérieur à 90°, mais dans les limites de deux tours, et un freinage ; et
l'unité de commande (7) accroît un pourcentage du mode d'entraînement brusque de pivot en marche avant-arrière par rapport au mode d'entraînement continu de pivot en marche avant-arrière, s'il est déterminé que le linge dans le tambour (3) flotte.

8. Machine à laver à tambour selon l'une quelconque des revendications 1 à 7, comprenant en outre un système de vidange (15) conçu pour évacuer l'eau de lavage présente dans la cuve de lavage (2) ;
l'unité de commande (7) évacue l'eau de lavage présente dans la cuve de lavage (2) pour une quantité prédéterminée ou un laps de temps prédéterminé, s'il est déterminé que le linge dans le tambour (3) flotte.
